(19) Europäisches Patentamt
European Patent Office
Office européen des brevets

(11) **EP 1 602 278 B1**

(12) **EUROPEAN PATENT SPECIFICATION**

(45) Date of publication and mention
of the grant of the patent:
**13.05.2009 Bulletin 2009/20**

(51) Int Cl.:
***A01N 57/20*** *(2006.01)*    ***A01N 25/14*** *(2006.01)*

(21) Application number: **04253244.0**

(22) Date of filing: **01.06.2004**

(54) **Glyphosate herbicide composition and method for preparing the same**

Herbizide Glyphosat enthaltende  Zusamnmensetzung  und Verfahren zu ihrer Herstellung

Composition herbicide contenant du glyphosate et procédé pour sa préparation

(84) Designated Contracting States:
**AT BE BG CH CY CZ DE DK EE ES FI FR GB GR HU IE IT LI LU MC NL PL PT RO SE SI SK TR**

(43) Date of publication of application:
**07.12.2005 Bulletin 2005/49**

(73) Proprietor: **Sinon Corporation
Taichung City (TW)**

(72) Inventors:
• **Tseng, Pen-Wen
Taichung City (TW)**
• **Liu, Jeff
Taichung City (TW)**

• **Wang, Chi-Chang
Taichung City (TW)**

(74) Representative: **Wakerley, Helen Rachael
Reddie & Grose
16 Theobalds Road
London
WC1X 8PL (GB)**

(56) References cited:
**EP-A- 0 582 561          WO-A-92/12637
WO-A-93/25081          WO-A-94/10844
US-A- 6 093 682**

**Description**

**BACKGROUND OF THE INVENTION**

**FIELD OF THE INVENTION**

The present invention relates to a glyphosate herbicide composition and a method for preparing the same.

**DESCRIPTION OF RELATED ART**

Glyphosate is a non-selective systemic herbicide widely applied in post-seeding weed control. After application for a period of time, glyphosate is absorbed by leafs and non-ligneous stems and transferred to the interior of the plant. It is very effective against deep-rooted perennial weeds and evergreen or annual or biannual Cyperaceae, Gramineae and broadleaf weed.

Glyphosate has a low water solubility at approximately 10.5 g/l (pH 1.9, 20°C). Thus, glyphosate herbicide is commonly turned into a salt derivative and then prepared in a liquid formulation before it is marketed. Commonly seen salt derivatives of glyphosate include glyphosate ammonium salt, glyphosate isopropylammonium salt, glyphosate sodium salt, and glyphosate trimesium salt, etc. The glyphosate product in liquid formulation is diluted with water before use; product in the water-soluble granule (WSG) or water dispersible granule(WDG) formulation is added with water to let the granules be dissolved or dispersed in water before use.

The weed control effect of glyphosate and its manufacturing process have been disclosed in US Patent No. 3,799,758, and the process for salt derivatives of glyphosate has been disclosed in US Patent No. 4,405,531. Other published methods for preparing glyphosate herbicide are disclosed in EPO Publication No. 0378985 and US Patent No. 5,872,078, which respectively relates to admixing glyphosate salt acquired by adding bases to glyphosate acid, the surfactant of ethoxylated tallow amine containing 15~18 moles of ethylene oxide and inorganic extender, such as ammonium sulfate, potassium sulfate, potassium chloride, sodium sulfate or urea, and then extruding the mixture to obtain a dry water soluble agriculturally acceptable composition. The US Patent No. 5,612,285 discloses the use of polyethylene glycol having an average molecular weight of from about 7000 ~ 9000 as extrusion aid.

However, the long-term and massive use of the inorganic extender in glyphosate herbicide will lead to acidification or salination of soil. For example, ammonium sulfate is physiologically acidic. This inorganic salt will break down into ammonia and sulfate upon contacting with the moisture in soil. The ammonia will be absorbed by the plant, while the sulfate will be left in the soil and gradually cause the acidic caking of soil, hence lowering the pH of soil. Potassium sulfate and potassium chloride also produce salt, sulfate and chlorine ion after application and gradually cause the acidification of soil. Urea produces nitrate in the soil after application and its long-term use also lowers the pH of soil. Sodium sulfate is a main ingredient in saline soil, which is hydrolyzed in soil and exhibits alkalinity to raise gradually the pH of soil to as high as 8.5. If the soil contains large amount of water-soluble salts, such as $Na_2SO_4$, $NaCl$, $MgSO_4$, $CaSO_4$, and $MgCl_2$, it becomes saline soil when the total content of water-soluble salts reaches 0.2% of dry soil amount, and is suitable for the growth of only a few adaptive plants. The addition of surfactant in herbicide or auxiliary agent will cause eye irritation and foaming. Thus, there is a need for developing novel herbicide for weed killing or control without the problem of soil acidification caused by the use of inorganic salt.

WO92/12637 discloses dry glyphosate formulations as granules or powders of a particle size less than 50 mesh comprising glyphosate and an acid acceptor which may be the salt of an organic acid having a pKa >2.27. WO 94/10844 discloses dry solid glyphosate formulations as granules or powders of a particle size of less than 50 mesh comprising a basic inorganic or organic substance. US 6,093,682 discloses powders or granules for preparing glyphosate dispersions with polyacrylamide drift control agents. WO93/25081 discloses dry flowable compositions of glyphosate comprising an anhydrous base, for example sodium acetate and a small amount of sucrose. EP 0582561 discloses dry extruded granules comprising ammonium glyphosate, a surfactant and an extrusion aid.

SUMMARY OF THE INVENTION

To address the drawback of prior art, the present invention provides a glyphosate herbicide composition, comprising 41 ~ 85% (w/w) water-soluble glyphosate salt derivative; 1 ~25% (w/w) monosodium L-glutamate as an organic extender; and 1 ~ 2% (w/w) water.

The organic extender in the glyphosate herbicide composition preferably is 3 ~ 8% monosodium L-glutamate.

The water-soluble glyphosate salt derivative used in the invention are glyphosate ammonium salt, glyphosate isopropylammonium salt, glyphosate sodium salt, or glyphosate trimesium salt, preferably dried glyphosate ammonium salt.

The glyphosate herbicide composition of the present invention is in the form of water-soluble granules. If necessary, the glyphosate herbicide of the present invention can be further mixed with other herbicide to enhance the weed control effect, or mixed with insecticide, dustmite miticide, nematicide, fungicide, or plant growth regulator.

The present invention further provides a method for preparing water-soluble granules of glyphosate herbicide, comprising the steps of: (1) mixing 41 ~ 85% (w/w) water-soluble glyphosate salt derivative with 1 ~ 25% (w/w) monosodium L-glutamate as organic extender into a pre-mixture; (2) milling the pre-mixture into ultrafine powder with at least 90% of powder passing 0.075mm mesh; (c) adding proper amount of water with total weight of 3 ~ 20% (w/w) to the ultrafine powder and mixing uniformly; and (d) extruding and drying the mixture obtained in step (c) to obtain the water-soluble granules of glyphosate herbicide.

In a preferred embodiment of the present invention, the method for preparing water-soluble granules of glyphosate herbicide comprises the steps of: milling the pre-mixture into ultrafine powder with at least 90% of powder passing 0.045 mm mesh. Preferably step (c) includes adding a proper amount of water with total weight of 6 ~ 14% (w/w).

The water-soluble granules of glyphosate prepared according to the aforementioned method preferably have particle size of 0.1 ~ 2.0 mm and length of 0.5 ~ 15mm; more preferably particle size of 0.5 ~ 1.0 mm and length of 1 ~ 6 mm. The moisture content of aforementioned water-soluble granules is preferably 0.5 ~ 4% (w/w), and more preferably 1 ~ 2% (w/w).

The drying temperature in step (d) is preferably 40 ~ 60°C.

The extender or water used in the invention is for modifying the physical properties of the herbicide composition, including attrition resistance, persistent foaming after dilution in water, disintegration in water, and heat storage stability of main ingredient. The organic extender used in the invention is monosodium L-glutamate, alone, or mixed with any one of glutamic acid, glutamine, lactose, sucrose, glucose, fructose, mannitol, D (+)-xylose, xylitol, xylose, sorbitol, arabinose.

The present invention still further provides a weed control method, comprising the step of applying an effective amount of aforesaid glyphosate herbicide composition pre-emergence or post-emergence to a plant, partial plant, seeds of plant or plant growing area.

The glyphosate herbicide composition according to the present invention is characterized by replacing the conventional inorganic extender, binder, or extrusion aid with organic substances comprising monosodium L-glutamate without the addition of auxiliary agent or surfactant. This simpler formulation will not produce the problems of eye irritation or foaming property with the addition of auxiliary agent or surfactant, nor will it cause acidification of soil with the addition of inorganic salt, while providing excellent weed control effect. It is a new kind of glyphosate herbicide that is safe, environmentally friendly and effective.

The glyphosate herbicide composition uses an organic compound, monosodium L-glutamate or mixtures thereof, as extender; the organic compound has functions of extender, binder and extrusion aid that no additional binder, extrusion aid or disintegrating agent is needed in the process to achieve extrusion and formation with ease. The use of aforementioned organic compound also helps to reduce the attrition resistance of finished product after drying and enhancing the dispersibility of finished product when diluted in water.

The method for preparing glyphosate herbicide composition and test results are depicted in examples below. These examples of glyphosate herbicide composition and method for preparing the same are meant to illustrate the advantages of the invention, and should not be construed as a limitation on the actual application of the present invention.

**Example: Method for preparing water-soluble granules of glyphosate**

The water-soluble granules of glyphosate herbicide in the examples disclosed herein are prepared by the following steps:

(a) Adding a proper amount of extender to water-soluble glyphosate salt and mixing them with a ribbon blender or an instrument having equivalent function into a pre-mixture of specific concentration;

(b) Subjecting the pre-mixture to the jet miller or an equipment having equivalent function under dry air pressure of 6-8 kg/cm$^2$ to let the granules of the pre-mixture collide with each other and crush into ultrafine powder. After this step, the pre-mixture has smaller particle sizes with at least 90% of particles passing 0.075mm mesh, preferably 0.045mm mesh, and obtain bigger surface area to increase the water solubility of finished product;

(c) Adding a proper amount of water to the resulting ultrafine powder of water-soluble glyphosate salt and subjecting the mixture to kneading in a kneader to obtain an uniform mixture; the amount of water added is 3 ~ 20% (w/w) of total mixture weights, preferably 6~14% (w/w);

(d) Passing the mixture obtained in step (c) through an extrusion granulator to obtain granules with cylindrical shape and particle size of 0.1 ~ 2.0mm, preferably 0.5 ~ 1.0mm, and length in the range of 0.5 ~ 15mm, preferably 1 ~ 6mm, depending on the size of mesh used in the extrusion process;

(e) After granulation is achieved, drying the granules in a fluid-bed dryer, oven or a device having equivalent function under 40 ~ 60°C to form dried granules as finished product; the moisture content of the finished product is 0.5 ~ 4% (w/w), preferably 1 ~ 2% (w/w).

(f) After drying, sieving the resulting granules and returning granules that do not meet the aforesaid specifications to the granulation process; and

(g) Putting the finished product to a heat resistance test under $54\pm2°C$, and taking out the product after 14 days for analysis of the main ingredient content (glyphosate salt). The decomposition rate of the glyphosate salt after drying meets the specification of Food and Agriculture Organization of the United Nations (FAO), that is, not higher than 5%.

**Example 1: Preparing water-soluble granules containing active ingredient of 10% (w/w) glyphosate ammonium salt**

| Pre-mixture of water-soluble granules of 10% (w/w) glyphosate ammonium salt | |
| --- | --- |
| Composition | Weight ratio % (w/w) |
| 95% glyphosate ammonium salt technical | 12.00 |
| Monosodium L-glutamate | 8.00 |
| Sucrose | 80.00 |

According to the method described in Example, firstly mixing the above ingredients by the indicated ratio with a ribbon blender to obtain a pre-mixture of water-soluble granules of 10% (w/w) glyphosate ammonium salt; subjecting the pre-mixture to a jet miller to crush it into ultrafine powder with at least 90% of powder passing 0.045mm mesh; feeding the ultrafine powder to ribbon blender and introducing water by spraying to obtain a mixture with water content of 9 ~ 11% (w/w); subjecting the mixture to a kneader to obtain uniform distribution of water. Using an extrusion granulator installed with 1.0mm mesh to produce cylindrical granules with particle size of 0.8 ~ 1.0mm and length of 3 ~ 4mm. Drying the granules in a fluid bed dryer under 40 ~ 50°C to remove water in the granules. The final dried granules have a moisture content of approximately 1 ~ 2% (w/w). Dried granules that do not meet the aforementioned specifications after sieving are returned to the granulation process.

According to the method described above, water-soluble granules containing active ingredient of 10%w/w glyphosate ammonium salt are obtained.

**Example 2: Preparing water-soluble granules containing active ingredient of 41% (w/w) glyphosate ammonium salt**

| Pre-mixture of water-soluble granules of 41 % (w/w) glyphosate ammonium salt | |
| --- | --- |
| Composition | Weight ratio % (w/w) |
| 95% glyphosate ammonium salt technical | 45.00 |
| Monosodium L-glutamate | 8.00 |
| Lactose | 47.00 |

Mixing the above ingredients according to indicated ratios and following the steps in Example 1, water-soluble granules containing active ingredient of 41%w/w glyphosate ammonium salt are obtained.

**Example 3: Preparing water-soluble granules containing active ingredient of 50% (w/w) glyphosate ammonium salt**

| Pre-mixture of water-soluble granules of 50% (w/w) glyphosate ammonium salt | |
| --- | --- |
| Composition | Weight ratio % (w/w) |
| 95% glyphosate ammonium salt technical | 55.00 |

(continued)

Pre-mixture of water-soluble granules of 50% (w/w) glyphosate ammonium salt

| Composition | Weight ratio % (w/w) |
|---|---|
| Monosodium L-glutamate | 8.00 |
| Glucose | 37.00 |

Mixing the above ingredients according to indicated ratios and following the steps in Example 1, water-soluble granules containing active ingredient of 50%(w/w) glyphosate ammonium salt are obtained.

**Example 4: Preparing water-soluble granules containing active ingredient of 60% (w/w) glyphosate ammonium salt**

Pre-mixture of water-soluble granules of 60% (w/w) glyphosate ammonium salt

| Composition | Weight ratio % (w/w) |
|---|---|
| 95% glyphosate ammonium salt technical | 65.00 |
| Monosodium L-glutamate | 5.00 |
| Sucrose | 30.00 |

Mixing the above ingredients according to indicated ratios and following the steps in Example 1, water-soluble granules containing active ingredient of 60%w/w glyphosate ammonium salt are obtained.

**Example 5: Preparing water-soluble granules containing active ingredient of 74.7% (w/w) glyphosate ammonium salt**

Pre-mixture of water-soluble granules of 74.7% (w/w) glyphosate ammonium salt

| Composition | Weight ratio % (w/w) |
|---|---|
| 95% glyphosate ammonium salt technical | 80.00 |
| Monosodium L-glutamate | 20.00 |

Mixing the above ingredients according to indicated ratios and following the steps in Example 1, water-soluble granules containing active ingredient of 74.7%w/w glyphosate ammonium salt are obtained.

**Example 6: Preparing water-soluble granules containing active ingredient of 74.7% (w/w) glyphosate ammonium salt**

Pre-mixture of water-soluble granules of 74.7% (w/w) glyphosate ammonium salt

| Composition | Weight ratio % (w/w) |
|---|---|
| 95% glyphosate ammonium salt technical | 80.00 |
| Monosodium L-glutamate | 3.00 |
| Lactose | 17.00 |

Mixing the above ingredients according to indicated ratios and following the steps in Example 1, water-soluble granules containing active ingredient of 74.7%w/w glyphosate ammonium salt are obtained.

**Example 7: Preparing water-soluble granules containing active ingredient of 74.7% (w/w) glyphosate ammonium salt**

| Pre-mixture of water-soluble granules of 74.7% (w/w) glyphosate ammonium salt | |
|---|---|
| Composition | Weight ratio % (w/w) |
| 95% glyphosate ammonium salt technical | 80.00 |
| Monosodium L-glutamate | 3.00 |
| Glucose | 17.00 |

Mixing the above ingredients according to indicated ratios and following the steps in Example 1, water-soluble granules containing active ingredient of 74.7%w/w glyphosate ammonium salt are obtained.

**Example 8: Preparing water-soluble granules containing active ingredient of 74.7%(w/w) glyphosate ammonium salt**

| Pre-mixture of water-soluble granules of 74.7% (w/w) glyphosate ammonium salt | |
|---|---|
| Composition | Weight ratio % (w/w) |
| 95% glyphosate ammonium salt technical | 80.00 |
| Monosodium L-glutamate | 3.00 |
| Sucrose | 17.00 |

Mixing the above ingredients according to indicated ratios and following the steps in Example 1, water-soluble granules containing active ingredient of 74.7%w/w glyphosate ammonium salt are obtained.

**Example 9: Preparing water-soluble granules containing active ingredient of 74.7% (w/w) glyphosate ammonium salt**

| Pre-mixture of water-soluble granules of 74.7% (w/w) glyphosate ammonium salt | |
|---|---|
| Composition | Weight ratio % (w/w) |
| 95% glyphosate ammonium salt technical | 80.00 |
| Monosodium L-glutamate | 3.00 |
| Fructose | 17.00 |

Mixing the above ingredients according to indicated ratios and following the steps in Example 1, water-soluble granules containing active ingredient of 74.7%w/w glyphosate ammonium salt are obtained.

**Example 10: Preparing water-soluble granules containing active ingredient of 74.7% (w/w) glyphosate ammonium salt**

| Pre-mixtuxre of water-soluble granules of 74.7% (w/w) glyphosate ammonium salt | |
|---|---|
| Composition | Weight ratio % (w/w) |
| 95% glyphosate ammonium salt technical | 80.00 |
| Monosodium L-glutamate | 3.00 |
| Mannitol | 17.00 |

Mixing the above ingredients according to indicated ratios and following the steps in Example 1, water-soluble granules containing active ingredient of 74.7%w/w glyphosate ammonium salt are obtained.

**Example 11: Comparison of physical properties**

The physical properties of glyphosate herbicide prepared in Examples 5 ~ 8 in the aspect of attrition resistance, persistent foaming and disintegration in water and those of glyphosate ammonium salt (GAS) herbicide available on the market are compared in accordance with the guidelines described in the CIPAD Handbook, and the results are depicted in Table 1.

**Test methods:**

Attrition resistance test method

Firstly screening the test samples to 32 mesh and retain 100 g of test sample with particles larger than 32 mesh. Putting the retained sample along with three magnetic balls into a vessel (100mm long and 100mm in diameter) for hardness testing. Sealing the vessel and then putting it into a rolling blender. Setting the rotation speed of blender at 75rpm and let the vessel roll for 15 minutes. Taking out the test sample and removing powder adhered to the walls of vessel. Sieving the sample using 32 mesh. Setting the weight of granules smaller than 32 mesh as A to calculate the attrition resistance by the following formula:

$$\text{Attrition resistance} = A/100 \times 100\%$$

Attrition resistance test method

Refer to Collaborative International Pesticides Analytical Council Handbook (CIPAC Handbook MT47.1 on persistent foaming)

Disintegration in water test method

Adding 100ml of 342ppm hard water (in reference to CIPAC MT 18 Standard Waters) into a 250ml beaker. Weighing 0.2 g of a test sample and pouring it into the beaker from 5cm above the water level. Observing the time required for the test sample to transform from granules to powder and recording it; the time observed is the measure of disintegration in water.

**Table 1: Comparison of Physical Properties of Water-soluble Granules of 74.7% Glyphosate Ammonium Salt**

| No. | Sample | Attrition resistance (%) | Persistent foaming (diluted 50X) (ml) | Persistent foaming (diluted 200X) (ml) | Disintegration in water (sec) |
|---|---|---|---|---|---|
| 1 | 74.7% GAS (Example 5) | 0.3 | 5 | 0 | 135 |
| 2 | 74.7% GAS (Example 6) | 0.8 | 24 | 10 | 140 |
| 3 | 74.7% GAS (Example 7) | 0.6 | 0 | 0 | 100 |
| 4 | 74.7% GAS (Example 8) | 0.5 | 4 | 0 | 125 |
| 5 | 74.7% GAS (Market brand) | 64.0 | 65 | 40 | 180 |

As shown in Table 1, the attrition resistance of the market brand was 64.0%, while that of glyphosate ammonium salt herbicide of the invention ranged from 0.3 ~ 0.8%. With regarding to persistent foaming diluted 50 times, that of the market brand was 65ml, while that of the herbicide of this invention ranged from 0 ~ 24ml; for persistent foaming diluted 200 times, that of market brand was 40ml, while that of Example 6 was only 10ml, and that of Examples 5, 7 and 8 were 0ml. With regarding to disintegration in water, that of market brand was 180 sec, while herbicide of this invention needed only 100 ~ 140 sec to attain the same level of dispersion. Thus, the glyphosate ammonium salt herbicide according to the present invention is superior to market brand in attrition resistance, persistent foaming and disintegration in water, suggesting that the organic extender in the herbicide composition of the invention can effectively prevent foaming associated with surfactant or auxiliary agent, and provide excellent dispersibility.

**Field Test:**

Field test was carried out to test the weed control effect of glyphosate herbicide (water-soluble granules containing 74.7% (w/w) glyphosate ammonium salt) prepared in Examples 5, 6 and 7.

A. Materials and method

Dividing the 5m × 2m test area (10M$^2$) into 18 blocks. Applying the test material around fast growing and flowering stage of weeds (see Table 2 for test materials) to 3 blocks per treatment. Prior to application, observing the weed canopy, and species and names of weeds in the test area.

B. Evaluation standards

Examining visually the percentage of weed yellowing in each block on day 7, day 15, day 22 and day 29 after application; on day 29 after application, selecting 2 representative sampling spots in each block to collect weeds within 1 square meter of area. Investigating the number of weeds and their fresh weight.

Weed control rate: Evaluating the effect on 3 ~ 5 major weeds by visual observation (e.g. drying, dwarfing, inhibited growth, number of weeds, weight of weed), and expressing by percentage.

**Table 2: Dose of Water-soluble Granules of 74.7% Glyphosate Ammonium Salt and Dose of Active Ingredient in the Field Test**

| No. | Sample | Formulation | Dose per block (g or ml) | Dose of active ingredient/ hectare (g or ml) | Dose/hectare (kg or L) |
|---|---|---|---|---|---|
| 1 | Blank control | NA | 0 | 0 | 0 |
| 2 | 74.7% GAS (Example 5) | Water-soluble granule | 3.3 | 2460 | 3.3 |
| 3 | 74.7% GAS (Example 6) | Water-soluble granule | 3.3 | 2460 | 3.3 |
| 4 | 74.7% GAS (Example 7) | Water-soluble granule | 3.3 | 2460 | 3.3 |
| 5 | 85% GAS (another brand) | Water-soluble granule | 2.9 | 2460 | 2.9 |
| 6 | 41% glyphosate isopropylammonium salt (Liquid) | Liquid | 6.0 | 2460 | 6.0 |
| 7 | 74.7% GAS (market brand) | Water-soluble granule | 3.3 | 2460 | 3.3 |

Group 1 was blank control; Groups 2, 3, and 4 used the formulation of this invention; Group 6 was the liquid formulation control; Groups 5 and 7 were water-soluble granules of other brands. The results of field test are illustrated in Table 3, 4 and 5 below.

**Table 3: Major Weed Species and Canopy (%) of Test Area before Application of Herbicide**

| Weed species | Group No. | | | | | | |
|---|---|---|---|---|---|---|---|
| | 1 | 2 | 3 | 4 | 5 | 6 | 7 |
| Southern crabgrass (*Digitaria adscendens*) | 87 | 87 | 87 | 87.3 | 85.7 | 87 | 86.3 |
| Bermudagrass (*Cynodon dactylon*) | 12.3 | 12 | 12 | 11.3 | 13.3 | 12.3 | 13 |
| Purple nutgrass (*Cyperus rotundus*) | 0.7 | 1 | 1 | 1.4 | 1 | 0.7 | 0.7 |
| Percentage of total canopy | 100 | 100 | 100 | 100 | 100 | 100 | 100 |

**Table 4: Change of Percentage of Yellowing (%)**

| No. | Sample | Formulation | Dose/hectare (kg, L) | Days after application | | | |
|---|---|---|---|---|---|---|---|
| | | | | 7 | 15 | 22 | 29 |
| 1 | Blank control | NA | - | -b | -b | -b | -b |
| 2 | 74.7% GAS (Example 5) | Water-soluble granule | 3.3 | 51.7a | 69.7a | 88.7a | 100a |
| 3 | 74.7% GAS (Example 6) | Water-soluble granule | 3.3 | 52.7a | 69.0a | 88.7a | 100a |
| 4 | 74.7% GAS (Example 7) | Water-soluble granule | 3.3 | 52.0a | 69.3a | 88.7a | 100a |
| 5 | 85% GAS (another brand) | Water-soluble granule | 2.9 | 52.3a | 69.3a | 89.7a | 100a |
| 6 | 41% glyphosate isopropylammonium salt (liquid) | Liquid | 6.0 | 52.7a | 69.7a | 89.7a | 100a |
| 7 | 74.7% GAS (market brand) | Water-soluble granule | 3.3 | 52.3a | 70.0a | 90.0a | 100a |

**Table 5: Fresh Weight of Weeds on Day 29 after Application**

| No. | Sample | Formulation | Dose/hectare (kg, L) | Fresh weight (gram/m$^2$) |
|---|---|---|---|---|
| 1 | Blank control | NA | 0 | 2280a |
| 2 | 74.7% GAS (Example 5) | Water-soluble granule | 3.3 | 1596b |
| 3 | 74.7% GAS (Example 6) | Water-soluble granule | 3.3 | 1583b |
| 4 | 74.7% GAS (Example 7) | Water-soluble granule | 3.3 | 1224b |
| 5 | 85% GAS (another brand) | Water-soluble granule | 2.9 | 1332b |
| 6 | 41% glyphosate isopropylammonium salt (liquid) | Liquid | 6.0 | 1242b |
| 7 | 74.7% GAS (market brand) | Water-soluble granule | 3.3 | 1452b |

* Statistical analysis used Duncan's Multiple Range Test at 5% significance level; a and b indicate significant difference between treatment blocks.

C. Results

1. Test time and first observation

Test material was applied on 09/24/2003. Test field was observed the first time on 10/1/2003 (day 7 after application) and no herbicide toxicity was found.

2. Species of weed

Weeds in the test area included: 1. southern crabgrass, 2. bermudagrass, 3. purple nutgrass.

3. First observation:

Treatment blocks were observed on 10/1/2003 (day 7 after application) and no significant difference among different groups was found, indicating that the herbicide according to the present invention had good preliminary result.

4. The second, third and fourth observations

In subsequent observations taken place on 10/9/2003 and 10/16/2003 (day 15 and day 22 after application), the percentage of yellowing in each treatment block was close without significant difference.

5. The fifth observation

In the observation conducted on 10/23/2003 (day 29 after application), yellowing in each treatment block reached 100%, indicating excellent weed control effect.

D. Conclusion

In the field test, weed control effect in different treatment blocks observed did not show significant difference, indicating that the simpler formulation and process disclosed in the present invention provides the same effect as liquid and granular products available on the market, while offering the advantages of not causing acidification and salination of soil or eye irritation, and the advantage of low foaming.

**OTHER EMBODIMENTS**

The embodiments of the present invention have been disclosed in the examples. Anybody familiar with the skills in this field may change or modify the aforesaid steps and conditions and use equipment or methods having identical or equivalent purpose and functions to produce the glyphosate herbicide composition of this invention.

**Claims**

1. A glyphosate herbicide composition, comprising
41 ~ 85 % (w/w) water-soluble glyphosate salt derivative;
1 ~ 25 % monosodium L-glutamate; and
1 ~ 2 % (w/w) water.
wherein the water-soluble glyphosate salt derivative comprises glyphosate ammonium salt, glyphosate isopropylammonium salt, glyphosate sodium salt, or glyphosate trimesium salt, and the herbicide composition is water-soluble granules.

2. The glyphosate herbicide composition according to Claim 1, wherein said water-soluble glyphosate salt derivative is dried glyphosate ammonium salt.

3. The glyphosate herbicide composition according to Claim 1, comprising 3 ~ 8% monosodium L-glutamate.

4. The glyphosate herbicide composition according to Claim 1, wherein said herbicide composition is further mixed with other herbicide, insecticide, dustmite miticide, nematicide, fungicide, or plant growth regulator.

5. The glyphosate herbicide composition according to Claim 1, wherein said water-soluble granules have particle size of 0.1 ~ 2.0mm and length of 0.5 ~ 15mm.

6. The glyphosate herbicide composition according to Claim 5, wherein said water-soluble granules have particle size of 0.5 ~ 1.0mm and length of 1 ~ 6mm.

7. A method for preparing water-soluble granules of glyphosate herbicide, comprising the steps of:

   (a) mixing 41 ~ 85% (w/w) water-soluble glyphosate salt derivative with 1 ~ 25% (w/w) monosodium L-glutamate into a pre-mixture;
   (b) milling said pre-mixture into ultrafine powder with at least 90% of powder passing 0.075mm mesh;
   (c) adding a proper amount of water with total weight of 3 ~ 20% (w/w) to said ultrafine powder and mixing uniformly; and
   (d) extruding and drying the mixture obtained in step (c) to obtain the water-soluble granules of glyphosate herbicide;

   wherein the water-soluble glyphosate salt derivative comprises glyphosate ammonium salt, glyphosate isopropylammonium salt, glyphosate sodium salt, or glyphosate trimesium salt.

8. The method according to Claim 7, wherein said ultrafine powder in step (b) is at least 90% passing 0.045 mesh.

9. The method according to Claim 7, wherein total weight of water added in step (c) is 6 ~ 14% (w/w).

10. The method according to Claim 7, wherein the drying temperature in step (d) is 40 ~ 60 °C.

11. The method according to Claim 7, wherein the moisture content of water-soluble granules in step (d) is 0.5 ~ 4% (w/w).

12. The method according to Claim 11, wherein the moisture content of water-soluble granules in step (d) is 1 ~ 2% (w/w).

13. The method according to Claim 7, wherein the water-soluble glyphosate salt derivative in step (a) is dried glyphosate ammonium salt.

14. The method according to Claim 7, wherein 3 ~ 8% monosodium L-glutamate is mixed in step (a).

15. The method according to Claim 7, wherein the method further comprises the step of mixing other herbicide, insecticide, dustmite miticide, nematicide, fungicide, or plant growth regulator.

16. A method for weed control, comprising the step of applying an effective amount of glyphosate herbicide composition of Claim 1 pre-emergence or post-emergence to a plant, partial plant, seeds of plant or plant growing area.


**Patentansprüche**

1. Glyphosatherbizid-Zusammensetzung, die Folgendes umfasst:

   41 ~ 85 % (w/w) wasserlösliches Glyphosat-Salzderivat,
   1 ~ 25 % Mononatrium-L-Glutamat und
   1 ~ 2 % (w/w) Wasser,

   wobei das wasserlösliche Glyphosat-Salzderivat Glyphosatammoniumsalz, Glyphosatisopropylammoniumsalz, Glyphosatnatriumsalz oder Glyphosattrimesiumsalz und die Herbizidzusammensetzung wasserlösliche Körnchen umfasst.

2. Glyphosatherbizid-Zusammensetzung nach Anspruch 1, wobei das genannte wasserlösliche Glyphosat-Salzderivat getrocknetes Glyphosatammoniumsalz ist.

3. Glyphosatherbizid-Zusammensetzung nach Anspruch 1, die 3 ~ 8 % Mononatrium-L-Glutamat umfasst.

4. Glyphosatherbizid-Zusammensetzung nach Anspruch 1, wobei die genannte Herbizidzusammensetzung ferner mit einem anderen Herbizid, Insektizid, Staubmilbenbekämpfungsmittel, Nematozid, Fungizid oder Pflanzenwachstumsregulator gemischt ist.

5. Glyphosatherbizid-Zusammensetzung nach Anspruch 1, wobei die genannten wasserlöslichen Körnchen eine Partikelgröße von 0,1 ~ 2,0 mm und eine Länge von 0,5 ~ 15 mm haben.

6. Glyphosatherbizid-Zusammensetzung nach Anspruch 5, wobei die genannten wasserlöslichen Körnchen eine Partikelgröße von 0,5 ~ 1,0 mm und eine Länge von 1 ~ 6 mm haben.

7. Verfahren zum Herstellen wasserlöslicher Körnchen aus Glyphosatherbizid, das die folgenden Schritte beinhaltet:

   (a) Mischen von 41 ~ 85 % (w/w) wasserlöslichem Glyposat-Salzderivat mit 1 ~ 25 % (w/w) Mononatrium-L-Glutamat zu einem Vorgemisch,
   (b) Vermahlen des genannten Vorgemischs zu einem ultrafeinen Pulver, wobei wenigstens 90 % des Pulvers durch 0,075-mm-Maschen passen,
   (c) Hinzufügen einer geeigneten Wassermenge mit einem Gesamtgewicht von 3 ~ 20 % (w/w) zum genannten ultrafeinen Pulver und gleichmäßig Mischen; und
   (d) Strangpressen und Trocknen des in Schritt (c) erhaltenen Gemischs, um die wasserlöslichen Körnchen aus Glyphosatherbizid zu erhalten,

   wobei das wasserlösliche Glyphosat-Salzderivat Glyphosatammoniumsalz, Glyphosatisopropylammoniumsalz, Glyphosatnatriumsalz oder Glyphosattrimesiumsalz umfasst.

8. Verfahren nach Anspruch 7, wobei das genannte ultrafeine Pulver in Schritt (b) zu wenigstens 90 % durch 0,045-Maschen passt.

9. Verfahren nach Anspruch 7, wobei das Gesamtgewicht des in Schritt (c) zugegebenen Wassers 6 ~ 14 % (w/w) beträgt.

10. Verfahren nach Anspruch 7, wobei die Trocknungstemperatur in Schritt (d) 40 ~ 60°C beträgt.

11. Verfahren nach Anspruch 7, wobei der Feuchtigkeitsgehalt wasserlöslicher Körnchen in Schritt (d) 0,5 ~ 4 % (w/w) beträgt.

12. Verfahren nach Anspruch 11, wobei der Feuchtigkeitsgehalt wasserlöslicher Körnchen in Schritt (d) 1 ~ 2 % (w/w) beträgt.

13. Verfahren nach Anspruch 7, wobei das wasserlösliche Glyphosat-Salzderivat in Schritt (a) getrocknetes Glyphosatammoniumsalz ist.

14. Verfahren nach Anspruch 7, wobei 3 ~ 8 % Mononatrium-L-Glutamat in Schritt (a) gemischt werden.

15. Verfahren nach Anspruch 7, wobei das Verfahren ferner den Schritt des Mischens eines anderen Herbizids, Insektizids, Staubmilbenbekämpfungsmittels, Nematozids, Fungizids oder Pflanzenwachstumsregulators beinhaltet.

16. Verfahren zur Unkrautbekämpfung, das den Schritt des Aufbringens einer wirksamen Menge der Glyphosatherbizid-Zusammensetzung aus Anspruch 1 vor dem Auflaufen bzw. nach dem Auflaufen auf eine Pflanze, Teile einer Pflanze, Samen einer Pflanze oder auf einen Pflanzenanbaubereich beinhaltet.

**Revendications**

1. Composition herbicide au glyphosate, comprenant
   41 ~ 85% (p/p) de dérivé de sel de glyphosate soluble dans l'eau;
   1 ~ 25% de L-glutamate de monosodium; et
   1 ~ 2% (p/p) d'eau.
   dans laquelle le dérivé de sel de glyphosate soluble dans l'eau comprend du sel d'ammonium de glyphosate, du sel d'isopropylammonium de glyphosate, du sel de sodium de glyphosate ou du sel de trimesium de glyphosate et la composition herbicide est des granules solubles dans l'eau.

2. La composition herbicide au glyphosate selon la revendication 1, dans laquelle ledit dérivé de sel de glyphosate soluble dans l'eau est du sel d'ammonium de glyphosate séché.

3. La composition herbicide au glyphosate selon la revendication 1, comprenant 3 ~ 8% de L-glutamate de monosodium.

4. La composition herbicide au glyphosate selon la revendication 1, dans laquelle ladite composition herbicide est en plus mélangée avec un autre herbicide, insecticide, acaricide, nématicide, fongicide ou régulateur de croissance végétale.

5. La composition herbicide au glyphosate selon la revendication 1, dans laquelle lesdits granules solubles dans l'eau ont une grosseur de particule de 0,1 ~ 2,0 mm et une longueur de 0,5 ~ 15 mm.

6. La composition herbicide au glyphosate selon la revendication 5, dans laquelle lesdits granules solubles dans l'eau ont une grosseur de particule de 0,5 ~ 1,0 mm et une longueur de 1 ~ 6 mm.

7. Procédé de préparation de granules solubles dans l'eau d'herbicide au glyphosate, comprenant les étapes consistant à :

(a) mélanger 41 ~ 85% (p/p) de dérivé de sel de glyphosate soluble dans l'eau avec 1 ~ 25% (p/p) de L-glutamate de monosodium en un pré-mélange;
(b) moudre ledit pré-mélange en une poudre ultrafine avec 90% au moins de la poudre passant à travers une maille de 0,075 mm;
(c) ajouter une quantité d'eau correcte d'un poids total de 3 ~ 20% (p/p) à ladite poudre ultrafine et mélanger uniformément; et
(d) boudiner et sécher le mélange obtenu à l'étape (c) pour obtenir les granules solubles dans l'eau d'herbicide au glyphosate;

où le dérivé de sel de glyphosate soluble dans l'eau comprend du sel d'ammonium de glyphosate, du sel d'isopropylammonium de glyphosate, du sel de sodium de glyphosate ou du sel de trimesium de glyphosate.

8. Le procédé selon la revendication 7, dans lequel ladite poudre ultrafine de l'étape (b) passe au moins à 90% à travers une maille de 0,045.

9. Le procédé selon la revendication 7, dans lequel le poids total d'eau ajoutée à l'étape (c) est de 6 ~ 14% (p/p).

10. Le procédé selon la revendication 7, dans lequel la température de séchage à l'étape (d) est de 40 ~ 60°C.

11. Le procédé selon la revendication 7, dans lequel la teneur en humidité des granules solubles dans l'eau à l'étape (d) est de 0,5 ~ 4% (p/p).

12. Le procédé selon la revendication 11, dans lequel la teneur en humidité des granules solubles dans l'eau à l'étape (d) est de 1 ~ 2% (p/p).

13. Le procédé selon la revendication 7, dans lequel le dérivé de sel de glyphosate soluble dans l'eau à l'étape (a) est du sel d'ammonium de glyphosate séché.

14. Le procédé selon la revendication 7, dans lequel 3 ~ 8% de L-glutamate de monosodium est mélangé à l'étape (a).

15. Le procédé selon la revendication 7, dans lequel le procédé comprend en outre l'étape consistant à mélanger un autre herbicide, insecticide, acaricide, nématicide, fongicide ou régulateur de croissance végétale.

16. Procédé pour le contrôle des mauvaises herbes, comprenant l'étape consistant à appliquer une quantité efficace de la composition herbicide au glyphosate de la revendication 1 à une plante, à une plante partielle, à des graines de plante ou à une zone de culture végétale en pré-émergence ou en post-émergence.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3799758 A
- US 4405531 A
- EP 0378985 A
- US 5872078 A
- US 5612285 A

- WO 9212637 A
- WO 9410844 A
- US 6093682 A
- WO 9325081 A
- EP 0582561 A